Europäisches Patentamt

European Patent Office

Office européen des brevets

(19)

(11) Veröffentlichungsnummer: **0 195 382**
**A2**

(12) **EUROPÄISCHE PATENTANMELDUNG**

(21) Anmeldenummer: **86103464.3**

(22) Anmeldetag: **14.03.86**

(51) Int. Cl.⁴: **F 24 H 9/00**

(30) Priorität: **18.03.85 DE 3509675**

(43) Veröffentlichungstag der Anmeldung:
**24.09.86 Patentblatt 86/39**

(84) Benannte Vertragsstaaten:
**AT BE CH DE FR IT LI LU NL SE**

(71) Anmelder: **Viessmann, Hans, Dr.**
**Im Hain**
**D-3559 Battenberg/Eder(DE)**

(72) Erfinder: **Viessmann, Hans, Dr.**
**Im Hain**
**D-3559 Battenberg/Eder(DE)**

(74) Vertreter: **Wolf, Günter, Dipl.Ing.**
**Patentanwälte Dipl.-Ing. Amthor Dipl.-Ing. Wolf Postfach**
**70 02 45 An der Mainbrücke 16**
**D-6450 Hanau 7(DE)**

(54) Kondensationsheizkessel.

(57) Der Kondensationsheizkessel besteht aus einem wasserführenden Gehäuse mit brennerbestückter Brennkammer und aus von dieser durch das wasserführende Gehäuse zur Kondensatsammelkammer mit Gefälle geführten Heizgaszugkanälen. Um Kondensateintrocknungen und Kondensaterhöhungen insbesondere während der Brennerabschaltzeiten zu vermeiden, ist der Heizkessel derart ausgebildet, daß vor der Einmündung der Heizgaszugkanäle (8) mindestens eine mit Spritzdüse (4) versehene Flüssigkeitszufuhreinrichtung (3) angeordnet und diese mit einem derart brennerschaltungsgesteuerten Schaltventil (5) versehen ist, daß die Kondensatverdünnungs- und -spülflüssigkeit spätestens bei Brennerabschaltung für maximal die Dauer der Brennerabschaltung ausgedüst wird.

0195382

(15 466 E )

## Kondensationsheizkessel

Die Erfindung betrifft einen Kondensationsheizkessel gemäß Oberbegriff des Hauptanspruches.

Derartige Kondensationsheizkessel, die auch als sogen. Brennwertkessel bezeichnet werden, sind allgemein bekannt (bspw. DE-OS 32 38 603). Derartige Heizkessel unterscheiden sich in der Funktion von "normalen" Heizkesseln dadurch, daß gezielt die Heizgase bis zur Kondensation abgekühlt werden. Derartige Kondensationsheizkessel werden natürlich in moderner Betriebsweise wie die Normalheizkessel ebenfalls nicht im Dauerbetrieb betrieben, sondern der Brenner wird wärmebedarfsangepaßt mehr oder weniger lang abgeschaltet. Obgleich die dem Kondensat ausgesetzten Flächen derartiger Heizkessel aus geeigneten, d.h. mehr oder weniger kondensatfestem Material gebildet sind (Edelstahl), so ist doch davon auszugehen, daß derartige Materialien auf Dauer nicht absolut beständig gegen saures Kondensat sind. Zu berücksichtigen ist beim Betrieb derartiger Kondensationskessel, daß bei ausbleibendem Kondensatabfall (abgeschalteter Brenner) das vorher gebildete und niedergeschlagene Kondensat nicht vollständig abläuft, ggf. eintrocknet und seine Konzentration noch erhöht, wodurch im Laufe der Zeit das an sich kondensatfest sein sollende Material dann doch einem Korrosionsangriff ausgesetzt ist.

Der Erfindung liegt demgemäß die Aufgabe zugrunde, einen Kondensationsheizkessel der eingangs genannten Art dahingehend zu verbessern, daß diese Gefahr beseitigt bzw. zumindest weitgehend in ihrer negativen Auswirkung reduziert wird.

Diese Aufgabe ist mit einem Kondensationsheizkessel der eingangs genannten Art nach der Erfindung durch die im Kennzeichen des Patentanspruches angeführten Merkmale gelöst. Eine vorteilhafte Weiterbildung ergibt sich nach Anspruch 2.

Durch die Ausstattung eines derartigen Kondensatheizkessels mit einer Flüssigkeitszufuhreinrichtung ist es nämlich in einfacher Weise möglich, die kondensatkritischen Bereiche des Kessels gewissermaßen zu spülen, für einen beschleunigten Abfluß des Kondensats zu sorgen und, was auch wichtig ist, das Kondensat zu verdünnen. Eine geeignete Flüssigkeit ist im einfachsten Falle Wasser, das zu Anfang seiner Einspritzung sofort verdampft, damit aber den Neutralanteil der Heizgase erhöht und bei Kondensation schließlich zu einem nicht extrem stark sauren Kondensat führt. Außerdem ist es möglich, das eingeführte Wasser mit auf das saure Kondensat neutralisierend wirkenden Zusatzstoffen zu versetzen. Die vorgesehene Einbringung der Flüssigkeit in die Brennkammer bzw. die heizgasführenden Räume zu einem Zeitpunkt noch kurz vor Abschaltung des Brenners hat den Vorteil, daß die Flüssigkeit sofort verdampft, was mit einer beträchtlichen Volumenvergrößerung verbunden ist. Dieser Dampf verteilt sich natürlich entsprechend schnell auf alle gasführenden Räume und erreicht jeden Raumzwickel. Dadurch kommt man aber mit einer relativ geringen Flüssigkeitsmenge aus im Vergleich zu einer nur direkten Berieselung bzw. Spülung der kondensatkritischen Bereiche, die erst nach Abschaltung des Brenners einsetzen würde. Da eine Dauerberieselung nicht notwendig ist und letztlich auch wegen der anfallenden Flüssigkeitsmengen unsinnig wäre, ist die Flüssigkeitszufuhreinrichtung mit einem brennerschaltungsgesteuerten Schaltventil versehen, das die Flüssigkeitszufuhreinrichtung geraume Zeit vor Abschalten des Brenners wirksam sein läßt, was absolut ausreicht. Der Kondensatverdünnungsprozeß setzt also einerseits bereits vor Abschaltung des Brenners zur Verdampfung der zugeführten Flüssigkeit ein und wird dann noch eine geeignete Zeitspanne fortgesetzt.

Die erfindungsgemäße Kesselausbildung bzw. erfindungsgemäße Maßnahme zur Verhinderung von Kondensatangriff auf die betroffenen Wärmetauschflächen kann sowohl bei mit Gas befeuerten Kondensationsheizkesseln zur Anwendung kommen, insbesondere aber bei Kesseln, die mit Öl befeuert werden, das bekanntlich größere Anteile von Schwefel enthält.

Die Zufuhr von Flüssigkeit in die flamm- und heizgasführenden Räume von Heizkesseln ist zwar bekannt (bspw. nach DAS 21 58 205 und DOS 19 30 372), hierbei geht es aber nicht um eine Kondensatverdünnung bzw. Kondensatabspülung, sondern um die Erzielung einer optimalen Wärmeübertragung durch zum Teil Kontaktwärmeaustausch zwischen grundsätzlich bei eingeschaltetem Brenner eingespritzter Flüssigkeit und den Heizgasen, was aber nur mit zusätzlichen Leitungssystemen möglich ist, da die eingespritzte Flüssigkeit einem Flüssigkeitskreislauf des ganzen Kesselsystems entnommen und diesem wieder zugeführt wird.

Der erfindungsgemäße Kondensatheizkessel wird nachfolgend anhand der zeichnerischen Darstellung eines Ausführungsbeispieles näher erläutert.

Wie aus dem nur der Erläuterung dienenden schematischen Darstellungsbeispiel erkennbar, besteht der Kondensationsheizkessel aus einem wasserführenden Gehäuse 6 mit einem Feuerraum 1, in der eine topfartige, nach unten verschlossene Brennkammer 1' eingesetzt ist, in die von oben ein Sturzbrenner 1" hineinbrennt. Vom Feuerraum 1 gehen nach unten mit Gefälle geführte Heizgaskanäle 8 ab, die zur Kondensatsammelkammer 7 führen. Nach oben ist der Feuerraum 1 mit der topfartigen Brennkammer 1' durch das Gebläsegehäuse 9 des Sturzbrenners 1" abgeschlossen. Die Ausbildung der Heizgaskanäle 8 in Form von mehreren vertikalen Längstaschen ist nicht zwingend, d.h., es könnte sich auch um ein oder mehrere, ggf. schraubenförmig gewendelte Rohre handeln.

Der Forderung, zu bestimmten Zeiten eine Flüssigkeitszufuhr zwecks Kondensatverdünnung und Spülung zu bewirken, kann auf die verschiedenste Weise entsprochen werden. Für die bevorzugte Ausführungsform ist dabei im Grunde nur wesentlich, daß die Flüssigkeitszufuhr in den Innenraum 2 des Feuerraumes 1 vor den Einmündungen der Heizgaszüge 8 hinein erfolgen kann. Am vorteilhaftesten ist deshalb die Flüssigkeitszufuhreinrichtung 3 in Form mindestens einer in den Innenraum 2 gerichteten Spritzdüse 4, wie dargestellt, vorgesehen, wobei die Spritzdüse bzw. deren Zuleitung, sofern nicht das Eindüsen einer mit neutralisierenden Zusätzen versehenen Flüssigkeit vorgesehen ist, direkt mit einem verfügbaren Wasserleitungssystem verbunden. Da ferner, wie bemerkt, eine Dauereinspritzung der Flüssigkeit nicht erforderlich und zweckmäßig wäre, ist die Flüssigkeitszufuhreinrichtung 3 mit einem brennerschaltungsgesteuerten Schaltventil 5 versehen, das bewirkt, daß die Flüssigkeitszufuhreinrichtung 3 bereits geraume Zeit vor Abschaltung des Sturzbrenners 1" eingeschaltet wird und ggf. auch nach Abschaltung des Brenners noch geraume Zeit in Wirkung bleibt. Die dafür erforderlichen Schaltungselemente bedürfen keiner näheren Beschreibung, da diese ohne weiteres verfügbar sind.

- 1 -

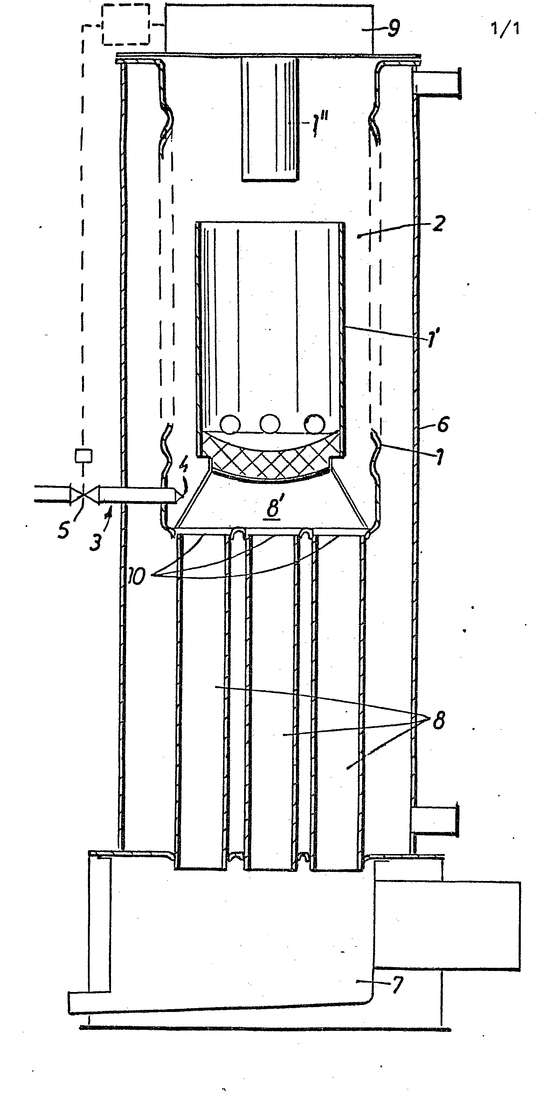

Patentansprüche:

1. Kondensationsheizkessel, bestehend aus einem wasserführenden Gehäuse mit brennerbestückter Brennkammer und mindestens einem von dieser durch das wasserführende Gehäuse zur Kondensatsammelkammer mit Gefälle geführten Heizgaskanal, d a d u r c h g e k e n n z e i c h n e t , daß vor der Einmündung (10) des mindestens einen Heizgaszugkanales (8) mindestens eine mit Spritzdüse (4) versehene Flüssigkeitszufuhreinrichtung (3) angeordnet und diese mit einem derart brennerschaltungsgesteuerten Schaltventil (5) versehen ist, daß die Kondensatverdünnungs- und -spülflüssigkeit spätestens bei Brennerabschaltung für maximal die Dauer der Brennerabschaltung ausgedüst wird.

2. Kondensatheizkessel nach Anspruch 1, d a d u r c h g e k e n n z e i c h n e t , daß die Flüssigkeitszufuhreinrichtung (3) aus mehreren Spritzdüsen (4) gebildet und diese rings um den Einmündungsbereich (8') der Heizgaszugkanäle (8) angeordnet ist.